# EUROPÄISCHE PATENTANMELDUNG

(11) **EP 4 814 563 A1**
(43) Veröffentlichungstag der Anmeldung: **30.09.2026**
(21) Anmeldenummer: 26166827.1
(22) Anmeldetag: 23.03.2026
(51) Int. Cl.: G02B 21/00, G02B 21/36

(54) **VERFAHREN UND MIKROSKOP ZUR SIM-MIKROSKOPIE**

(30) Priorität: 24.03.2025 DE 102025111331
(71) Anmelder: Carl Zeiss Microscopy GmbH, 07745 Jena (DE)
(72) Erfinder: NETZ, Ralf, 07745 Jena (DE); SIEBENMORGEN, JOERG, 07745 Jena (DE); HOLLINGER, Richard, 07745 Jena (DE)
(74) Vertreter: Patentanwälte Geyer, Fehners & Partner mbB

(57) **Zusammenfassung**

Es wird beschrieben ein Verfahren zur hochauflösenden SIM-Mikroskopie einer Probe (4), wobei das Verfahren aufweist Beleuchten der Probe (4) mit einem periodischen Beleuchtungsmuster (32), das als Gitterstruktur aus hellen Spots ausgebildet ist und dem Beugungsordnungen zugeordnet sind, Abbilden der Probe (4) längs einer optischen Achse auf einen Detektor, der Strahlung aufnimmt, wobei durch wiederholtes Beleuchten und Abbilden n Rohbilder der Probe (4) aufgenommen werden, wobei für jedes der n Rohbilder in einer senkrecht zur optischen Achse liegenden Probenebene eine individuelle laterale Position des Beleuchtungsmusters (32) verwendet wird, und Erzeugen eines hochaufgelösten Weitfeldbildes aus den n Rohbildern, wobei für jedes der n Rohbilder (32) während der Aufnahme der Strahlung das Beleuchtungsmuster (32) relativ zur Probe (4) längs der optischen Achse um eine axiale Periodenlänge des Beleuchtungsmusters oder um ein Vielfaches der axialen Periodenlänge verschoben wird.

## Beschreibung

Die Erfindung bezieht sich auf ein Verfahren zur hochauflösenden SIM-Mikroskopie einer Probe, wobei das Verfahren aufweist: Beleuchten der Probe mit einem 3D-periodischen Beleuchtungsmuster, das als Gitterstruktur aus hellen Spots ausgebildet ist und dem Beugungsordnungen zugeordnet sind, Abbilden der Probe längs einer optischen Achse auf einen Detektor, der Strahlung aufnimmt, wobei durch wiederholtes Beleuchten und Abbilden n Rohbilder der Probe aufgenommen werden, wobei für jedes der n Rohbilder eine individuelle Position des Beleuchtungsmusters in einer senkrecht zur optischen Achse liegenden Probenebene verwendet wird, und Erzeugen eines hochaufgelösten Weitfeldbildes aus den *n* Rohbildern.

Die Erfindung bezieht sich weiter auf ein Mikroskop zur hochauflösenden SIM-Mikroskopie einer Probe, das aufweist: eine Beleuchtungseinrichtung zum Beleuchten der Probe mit einem 3D-periodischen Beleuchtungsmuster, das als Gitterstruktur aus hellen Spots ausgebildet ist und dem Beugungsordnungen zugeordnet sind, eine Abbildungseinrichtung zum Abbilden der Probe längs einer optischen Achse auf einen Detektor, der Strahlung aufnimmt, und einer Steuereinrichtung, die die Beleuchtungseinrichtung und den Detektor ansteuert, um durch wiederholtes Beleuchten und Abbilden n Rohbilder der Probe aufzunehmen, wobei für jedes der n Rohbilder in einer senkrecht zur optischen Achse liegenden Probenebene eine individuelle Position des Beleuchtungsmusters verwendet wird, und einer optional als Teil der Steuereinrichtung ausgebildete Auswerteeinrichtung zum Erzeugen eines hochaufgelösten Weitfeldbildes aus den n Rohbildern.

Dieses Verfahren bzw. Mikroskop nutzt die nachfolgend erläuterte Technik des Lattice SIM, die eine Ausgestaltung der sog. "Structured Illumination Microscopy"-Technik ist; abgekürzt SIM. Die SIM-Technik hat sich als mikroskopisches Bildgebungsverfahren etabliert. Sie geht u.a. auf die Veröffentlichungen R. Heintzmann: Saturated patterned excitation microscopy with two-dimensional excitation patterns, Micron 34 (6-7), 283-291 (2003) und M. Gustafsson et al.: Three-Dimensional Resolution Doubling in Wide-Field Fluorescence Microscopy by Structured Illumination, Biophysical Journal 94, 4957-4970 (2008) zurück und sieht eine Beleuchtung der Probe mit einem SIM-Beleuchtungsmuster vor. Die Probe wird wiederholt abgebildet, wobei das Beleuchtungsmuster in verschiedene laterale Positionen zur Probe gebracht wird und für jeden, der so realisierten Beleuchtungszustände ein sog. Rohbild erhalten wird. Diese Rohbilder werden dann in einem Bildverarbeitungsprozess zusammengefasst, um ein Bild der Probe zu erhalten, das hinsichtlich Auflösung, insbesondere hinsichtlich Tiefenauflösung, gegenüber einer normalen Weitfeldabbildung mit demselben Mikroskop verbessert ist. Diese Verbesserung wird als "Hochauflösung" bezeichnet, da sie die mit herkömmlicher Weitfeldmikroskopie erreichbare Auflösung übertrifft.

SIM-Beleuchtungsmuster sind regelmäßig und periodisch. Die individuell positionierten Beleuchtungsmuster unterscheiden sich also nicht in ihrer Struktur, die jeweils identisch ist, sondern in ihrer Position, nämlich Relativlage zur Probe. Am Anfang der Entwicklung stand die Beleuchtung mit einem periodischen Streifenmuster, das verschoben und rotiert wurde. Diese Technik wird mittlerweile als 2D-SIM bezeichnet. Eine Weiterbildung erlaubt die Verbesserung auch der Tiefenauflösung und wird dementsprechend als 3D-SIM bezeichnet.

Eine deutliche Beschleunigung der Aufnahme der Rohbilder wurde durch Verwendung eines mehrdimensional periodischen SIM-Beleuchtungsmusters aus Spots (i.d.R. in einem quadratischen oder hexagonalen) Gitter erreicht, das aus mehreren zueinander interferenzfähigen Teilstrahlen erzeugt werden kann, die zweidimensional und punktsymmetrisch in einer Beleuchtungspupille im Beleuchtungsstrahlengang angeordnet sind. Diese Technik wird als Lattice SIM bezeichnet. Das SIM-Beleuchtungsmuster entsteht hier als Interferenzmuster aus Teilstrahlen. Es enthält diskrete Beleuchtungsmusterfrequenzen, die sich aus den Interferenzmöglichkeiten der Teilstrahlen ergeben. Die diskreten, räumlichen Beleuchtungsmusterfrequenzen entsprechen Interferenzen von Gitterbeugungsordnungen (der nullten und höherer Ordnungen), mit sich selbst und untereinander. Lattice SIM wird durch das eingangs genannte Verfahren und das eingangs genannte Mikroskop realisiert und ist näher z.B. in J. Siebenmorgen et al.: "Introducing Lattice SIM for ZEISS Elyra 7 - Structured Illumination Microscopy with a 3D Lattice for Live Cell Imaging", ZEISS Technology note, Dezember 2018, https://asset-downloads.zeiss.com/catalogs/download/mic/b05157e2-bcd6-4c82-b9f9-7639b446a74a/EN_WP_Introducing_Lattice_SIM_for_Elyra-7.pdf beschrieben.

Bei Lattice SIM können die Teilstrahlen aus einem Ausgangsstrahl erzeugt werden, der an einem in einer Zwischenbildebene das Beleuchtungsstrahlengangs liegenden 2D-Gitter in mehrere Beugungsordnungen, die als zueinander interferenzfähige Teilstrahlen in der Beleuchtungspupille eines Beleuchtungsstrahlengangs erscheinen, gebeugt wird. Der Begriff Beugungsordnung stellt auf die Erzeugung des Beleuchtungsmusters durch Interferenz von Teilstrahlen in der Pupille ab. Der Begriff Beugungsordnung hat nichts zu tun mit einer Beugung an einem Gitter, die zum Bereitstellen der Teilstrahlen verwendet werden kann. Die Beugungsordnungen sind deshalb dem Beleuchtungsmuster zuzuordnen und nicht einem im Aufbau möglicherweise beleuchteten Gitter.

Es werden mehrere Rohbilder bei individuell positionierten SIM-Beleuchtungsmustern aufgenommen. Die Rohbilder enthalten Moiré-Muster mit den höheren Frequenzen der Probeninformation. Für die SIM-Mikroskopietechnik ist eine besondere Bildauswertung erforderlich, um aus dem Moiré-Muster das hochaufgelöste Bild der Probe zu erhalten. Mit dieser Auswertung befasst sich im Detail die US 11 867 894 B1, die hinsichtlich der Bildauswertung hier vollumfänglich durch Zitat eingebunden sei.

Mit der SIM-Technik befassen sich weiter: Neil M.A.A et al.: Method of obtaining optical sectioning by using structured light in a conventional microscope. Optics Letters 22, 1905-1907 (1997); Heintzmann R. und Huser T.: Super-Resolution Structured Illumination Microscopy. Chemical Reviews 117 (23), 13890-13908 (2017); Ströhl F. und Kaminski C.: Frontiers in structured illumination microscopy, Optica 3, 667-677 (2016); Schermelleh et al.: Super-resolution microscopy demystified, Nature Cell Biology 21, 72-84 (2019); Schropp M. und Uhl R.: Two-dimensional structured illumination microscopy, Journal of Microscopy 256, 23-36 (2014); Ingerman E.A. et al.: Signal, noise and resolution in linear and nonlinear structured-illumination microscopy, Journal of Microscopy 273, 3-25 (2019); Guo, Y. et al.: Visualizing Intracellular Organelle and Cytoskeletal Interactions at Nanoscale Resolution on Millisecond Timescales, Cell 175, 1430-1442 (2018); Frohn J. T. et al.: True optical resolution beyond the Rayleigh limit achieved by standing wave illumination, Proceedings of the National Academy of Sciences of the United States of America 97, 7232-7236 (2000); Beck M. et al.: Sub-100-nanometre resolution in total internal reflection fluorescence microscopy, Journal of Microscopy 232, 99-105 (2008); Gliko O. et al.: Fast two-dimensional standing-wave totalinternal reflection fluorescence microscopy using acousto-optic deflectors, Optics Letters 34, 836-838 (2009); Fiolka R.: Clearer view for TIRF and oblique illumination microscopy, Optics Express 24, 29556-29567 (2016); Young L.J. et al.: A Guide to Structured Illumination TIRF Microscopy at High Speed with Multiple Colors, Journal of Visualized Experiments 111 (2016), Kner P. et al.: "Super-Resolution Video Microscopy of Live Cells by Structured Illumination", Nature Methods, Vol. 6, S.339 (2009), und Guo M. et al.: Single-shot super-resolution total internal reflection fluorescence microscopy, Nature Methods 15, 425-428 (2018).

Die Anzahl der Rohbilder limitiert die Aufnahmerate. Mehr Rohbilder benötigen mehr Zeit. Die Anzahl der Rohbilder verringert zudem die Zahl an möglichen hochaufgelösten Bildern einer biologischen Probe, also die möglichen Wiederholungen des Mikroskopieprozesses, da jede Belichtung Fotoschädigungen erzeugt, bis schließlich die Probe störend geschädigt ist.

Für die Bildauswertung zum Erzeugen des hochaufgelösten Bildes benötigt man bei Lattice SIM 13 Rohbilder. Die US 11 867 894 B1 erreicht durch einen besonderen Iterationsansatz, dass weniger Rohbilder verwendet werden können. Dies beschleunigt die Bildaufnahme, ist jedoch rechenaufwändig. Kner et al. erreichen dasselbe Ergebnis mit einem anderen, besonderen Auswertealgorithmus. Die herkömmlichen Auswertealgorithmen können dies nicht erreichen.

Der Erfindung liegt die Aufgabe zu Grunde, bei Lattice SIM die Bildaufnahme zu beschleunigen, ohne besondere Auswertealgorithmen anwenden zu müssen. Insbesondere soll die Beschleunigung ohne gegenüber herkömmlichen Auswertealgorithmen gesteigerten Rechenaufwand erreicht werden.

Die Erfindung ist in den unabhängigen Ansprüchen definiert. Die abhängigen Ansprüche betreffen bevorzugte Ausgestaltungen.

Es ist ein Verfahren zur hochauflösenden SIM-Mikroskopie einer Probe vorgesehen. Dabei wird die Probe mit einem dreidimensional-periodischen Beleuchtungsmuster beleuchtet. Dieses Beleuchtungsmuster ist als (3D)-Gitterstruktur aus hellen Spots ausgebildet und hat u.a. eine Periode der hellen Spots in Tiefenrichtung in der Probe. Diesem Beleuchtungsmuster sind Beugungsordnungen zugeordnet. Diese Beugungsordnungen sind diskrete Raumfrequenzkomponenten des Beleuchtungsmusters; in der englischsprachigen Literatur werden sie als "spatial frequency components of the illumination intensity" bezeichnet, so z.B. 2008 von Gustafsson. Man kann dies so verstehen, dass die 3D-Gitterstruktur aus hellen Spots physikalisch interpretiert werden kann als Beugungsordnungen von interferenzfähigen Einzelstrahlen, die in einer Beleuchtungspupille des entsprechenden Beleuchtungsstrahlengangs angeordnet sind, wie oben allgemein zur SIM-Technik bereits erläutert. Die Begriffe Beugungsordnungen und diskrete Raumfrequenzkomponenten des Beleuchtungsmusters werden hier austauschbar verwendet.

Die Probe wird längs einer optischen Achse auf einem Detektor abgebildet, der Strahlung aufnimmt. Sie wird wiederholt beleuchtet und abgebildet, wobei bei jedem Beleuchtungs- und Abbildungsprozess ein Rohbild der Probe aufgenommen wird, Insgesamt werden n Rohbilder auf diese Weise aufgenommen. Sie unterscheiden sich hinsichtlich der individuellen Position des Beleuchtungsmusters in einer senkrecht zur optischen Achse liegenden Probenebene. Für jedes dieser Rohbilder ist eine individuelle Position des Beleuchtungsmusters gegeben, wie dies in der SIM-Technik bekannt ist. Aus den aufgenommen n Rohbildern wird ein hochaufgelöstes Weitfeldbild der Probe erzeugt. Um die Zahl der Rohbilder zu reduzieren, nämlich auf insbesondere n = 9 Rohbilder, wird für jedes der Rohbilder während der Aufnahme der Strahlung für das entsprechende Rohbild das Beleuchtungsmuster längs der optischen Achse relativ zur Probe verschoben.

Die Relativ-Verschiebung erstreckt sich über eine oder ein ganzzahliges Vielfaches der Periodenlänge des Beleuchtungsmusters. Diese axiale Verschiebestrecke beträgt entweder eine axiale Periodenlänge des 3D-periodischen Beleuchtungsmusters oder ein ganzzahliges Vielfaches davon.

Dies erreichet, dass mit weniger Rohbildern, nämlich n = 9 gearbeitet werden kann, obschon das 3D-Beleuchtungsmuster im Stand der Technik 13 Rohbilder benötigen würde. Die Verschiebung erreicht, dass im 3D-Beleuchtungsmuster die effektive Zahl der für die Rekonstruktion wirksamen, diskreten Raumfrequenzkomponenten des Beleuchtungsmusters (Beugungsordnungen) auf 9 reduziert ist. Auf diese Weise kann mit einer herkömmlichen Rekonstruktion auf Basis von *n* = 9 gearbeitet werden, denn die Wirkung der nullten Beugungsordnung mittelt sich im 3D-Beleuchtungsmuster durch die axiale Relativ-Verschiebung während der Aufnahme der Strahlung für das jeweilige Rohbild heraus. Somit sind in den Rohbildern Interferenzterme, welche auf die nullte Beugungsordnung im 3D-Beleuchtungsmuster zurückgehen würden, nicht vorhanden, was es erlaubt, bei herkömmlicher Bildauswertung die Zahl der Rohbilder zu reduzieren.

Die Optik des Beleuchtungsstrahlengangs, welche zur Erzeugung des Beleuchtungsmusters vorgesehen ist, kann aus dem Stand der Technik weitestgehend unverändert übernommen werden kann. Der Aufbau ist lediglich dahingehend zu ergänzen, dass während der Aufnahme der Bilddaten für jedes Rohbild (üblicherweise Integrationszeit eines Detektors) die entsprechende Verschiebung des Beleuchtungsmusters längs der optischen Achse relativ zur Probe erfolgen kann. Dazu kann eine vergleichsweise einfach ausgebildete Optik im Beleuchtungsstrahlengang vorgesehen werden. Z. B wird eine ohnehin vorhandene Tubuslinse adaptiv und damit einstellbar ausgestaltet. Als Alternative kann ein Gitter, das zur Erzeugung des Beleuchtungsmusters im Strahlengang angeordnet ist, axial verschoben werden. Ebenfalls möglich ist es, mittels Probentisch die ausgewählte, darzustellende Probenebene relativ zum 3D-Beleuchtungsmuster verschieben. Man muss dann i.d.R. eine durch die Verschiebung verursachte Defokussierung im Detektionspfad korrigieren.

Die Relativ-Verschiebung über die Verschiebestrecke kann während der Aufnahme des jeweiligen Rohbilds kontinuierlich erfolgen oder schrittweise. Bei einer schrittweisen Verstellung sollte die Periodenlänge L (oder ganzzahlige Vielfache davon) bevorzugt gleichmäßig abgeschritten werden - bei n Schritten also mit einer Schrittweite von L/n. Eine Abweichung von 10%, bevorzugt 5%, besonders bevorzugt 1%, hiervon ist zulässig. Wesentlich für die Option 1 ist es, dass die Relativ-Verschiebung erfolgt, während die Aufnahme der Strahlung für das jeweilige Rohbild erfolgt. Zweckmäßigerweise wird man einen Detektor verwenden, der für jedes der Rohbilder die Strahlung über eine Integrationsdauer aufnimmt, und die Verschiebung erfolgt während der Integrationsdauer für das jeweilige Rohbild.

Im entsprechenden Mikroskop ist die Steuereinrichtung so ausgebildet, dass sie die Relativ-Verschiebung realisiert. Es steuert eine im Beleuchtungsstrahlengang angeordnete Optik (z.B. Tubuslinse) zur Verschiebung des Beleuchtungsmusters in der Probe an.

Soweit hier ein SIM-Mikroskopieverfahren beschrieben wird, gelten diese Ausführungen natürlich auch für das SIM-Mikroskop, dessen Steuereinrichtung dann entsprechend ausgestaltet ist. Umgekehrt gelten natürlich Arbeitsweisen, welche die Steuereinrichtung ausführt, auch für das SIM-Verfahren. Die Steuereinrichtung weist bevorzugt einen Prozessor auf.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: ein Blockschaltbild einer Ausführungsform eines Verfahrens zur Lattice SIM-Mikroskopie;
- Fig. 2: ein Mikroskop, das zur Erzeugung von Rohbildern, die im Verfahren gemäß Fig. 1 ausgewertet werden, verwendet werden kann,
- Fig. 3: eine Schemadarstellung einer Ausführungsform einer Beleuchtungseinrichtung des Mikroskops der Fig. 2, mit Schemadarstellung von Lichtpunkten in einer Beleuchtungspupille zum Erzeugen eines aus Multispots aufgebauten SIM-Beleuchtungsmusters für die Lattice SIM-Technik,
- Fig. 4: Schemadarstellungen von Beugungsordnungen (diskrete Raumfrequenzkomponenten des Beleuchtungsmusters), die zur Rohbilderzeugung verwendet werden und
- Fig. 5: eine Schemadarstellung einer Ausführungsform der Beleuchtungseinrichtung des Mikroskops der Fig. 2.

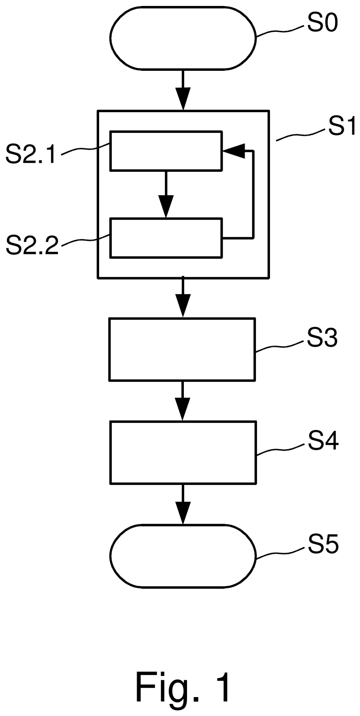

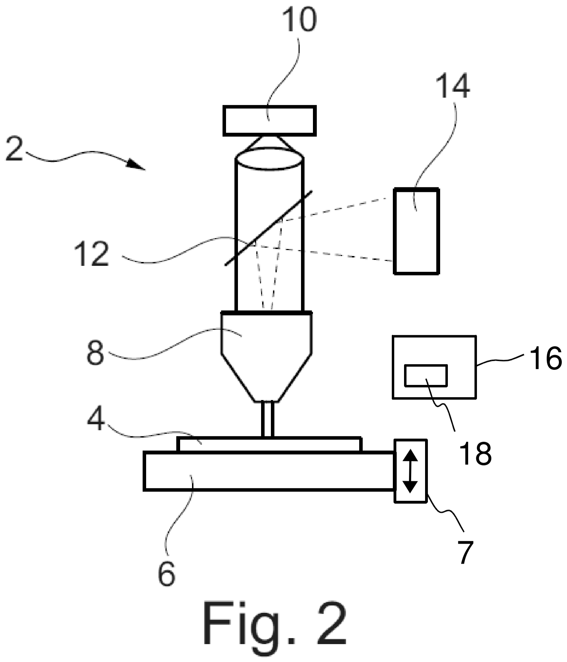

Fig. 1 zeigt als Blockschaltbild ein Verfahren zur Lattice SIM-Mikroskopie. Das Verfahren umfasst im Wesentlichen Schritte S0 bis S5, wovon der Teilschritt S2.2 ein Schritt ist, in dem eine Bewegung während der Bildaufnahme ausgeführt wird. Fig. 2 zeigt schematisch ein zur Verfahrensausführung geeignetes Mikroskop 2, das nach der Lattice SIM-Technik arbeitet. Das Mikroskop 2 bildet eine Probe 4 ab, die sich auf einem Probentisch 6 befindet. Die Abbildung erfolgt mittels eines Objektivs 8, das ein Objektfeld in der Probe 4 durch eine nicht weiter bezeichnete Tubuslinse auf einen Detektor 10 abbildet. Über einen Strahlteiler 12 beleuchtet eine Beleuchtungseinrichtung 14 die Probe 4 durch das Objektiv 8 derart, dass eine hinsichtlich der Positionierung in der Probe 4 einstellbare strukturierte Beleuchtung erfolgt, wie sie für die Lattice SIM-Technik dem Fachmann bekannt ist. Das Mikroskop 2 wird von einer Steuereinrichtung 16, umfassend u.a. einen Prozessor 18, gesteuert. Die Probe 4 befindet sich auf einem axial, d.h. senkrecht zur Lichteinfalls- und Abbildungsrichtung verstellbaren Tisch 6, der von einem Antrieb 7 angetrieben wird, welcher von der Steuereinrichtung 16 angesteuert wird.

Das Verfahren beginnt mit einem Start S0. Im Schritt S1 wird die Probe 4 mehrfach abgebildet, wobei sie mit einem SIM-Beleuchtungsmuster beleuchtet wird, wie für die Lattice SIM-Technik bekannt. Hierbei werden Teilschritte S2.1 und S2.2 wiederholt ausgeführt, nämlich für jedes zu erzeugende Rohbild einmal. In einem Teilschritt S2.1 wird das Beleuchtungsmuster in eine individuelle laterale Lage gebracht, wie es für die SIM-Technik bekannt ist. In einem Teilschritt S.2.2 wird die derart beleuchtete Probe 4 abgebildet. Dabei wird gemäß der eingangs genannten Option 1 die Relativlage des Beleuchtungsmusters relativ zur Probe 4 axial, d.h. längs der Einfallsrichtung der Strahlung des Beleuchtungsmusters verstellt. Diese Verstellung erfolgt, während die Signale für das Rohbild vom Detektor 10 ausgenommen werden. In Ausführungsformen ist der Detektor 10 ein Detektor, der die Strahlung zur Bilderzeugung über eine Integrationsdauer aufnimmt. Die Relativ-Verschiebung erfolgt dann während dieser Integrationszeit. Dazu steuert beispielsweise die Steuereinrichtung 16 eine Optik im Beleuchtungsstrahlengang entsprechend an, da die Verschiebung eine Relativ-Verschiebung zwischen Probe 4 und Beleuchtungsmuster ist. Die Relativ-Verschiebung erfolgt dabei so, dass sie eine (axiale) Periodenlänge des Beleuchtungsmusters als Verschiebeweg hat.

Sind die Bildsignale für ein Rohbild im Teilschritt S2.2 unter gleichzeitiger Verschiebung aufgenommen, wird zum Teilschritt S2.1 zurückgesprungen, und das Beleuchtungsmuster wird in eine andere laterale Position gebracht, woraufhin der Teilschritt S2.2 wiederholt wird. Die Teilschritte S2.1 und S2.2 werden damit so oft ausgeführt, wie Rohbilder aufgenommen werden sollen. Es handelt sich bevorzugt um 9 Rohbilder, d.h. neun Ausführungen des Teilschrittes S2.1 mit nachfolgendem Teilschritt S2.2. Die so erhaltenen 9 Rohbilder unterscheiden sich hinsichtlich der lateralen Lage des Beleuchtungsmusters, wie für Lattice SIM eingangs erläutert.

Für jede laterale Position des Beleuchtungsmusters erhält man ein Rohbild durch Abbildung der Probe 4 auf den Detektor 10. Somit liegen am Ende des Schrittes S1 9 Rohbilder vor. Jedes der 9 Rohbilder ist ein Abbild ein und derselben Probe, die mit dem Beleuchtungsmuster beleuchtet ist. Die Rohbilder unterscheiden sich dahingehend, wie das Beleuchtungsmuster individuell lateral positioniert ist. (Sie werden nur axial während der Bildaufnahme bewegt und ruhen in jedem Rohbild lateral.) Die individuelle laterale Position wird jeweils durch eine Beleuchtungsmusterfunktion angegeben, welche die Lage des Beleuchtungsmusters definiert oder wiedergibt. Die Angabe n bezieht sich auf die Zahl der Positionen, die aufgrund der Lattice SIM-Technik laterale Verschiebestellungen des Beleuchtungsmusters in der Probe 4 sind.

Das Beleuchtungsmuster weist Beleuchtungsmusterfrequenzen auf, die z.B. von einer Erzeugung des Beleuchtungsmusters durch Interferenz stammen. Wie vorstehend bereits ausgeführt und nachfolgend noch weiter erläutert, stellen die Beleuchtungsmusterfrequenzen m Beugungsordnungen, also diskrete Raumfrequenzkomponenten des Beleuchtungsmusters dar. Diese Interpretation ist üblich und sinnvoll, selbst wenn die Erzeugung anderweitig stattfand. Die Frequenzen der m Beugungsordnungen entsprechen diskreten räumlichen Beleuchtungsmusterfrequenzen, allerdings unter der Berücksichtigung, dass sie im konjugiert-komplexe Größen sind. Es gibt also oberhalb einer nullten Beugungsordnung, welche die der Grundfrequenz und damit ein Gleichtaktanteil ist, für jede der im Ortsraum definierten Beleuchtungsmusterfrequenzen immer Paare von zwei betragsgleichen Beugungsordnungen im Frequenzraum. Dies ist aus dem Stand der Technik, z.B. der Publikation von Gustafsson (2008), bekannt. Aufgrund der Lattice SIM-Technik gilt bei dem in Option 1 verwendeten 3D-periodischen Beleuchtungsmuster i.d.R. *m* = 13.

Mit den in Schritt S1 erzeugten 9 Rohbildern wird im Schritt S3 eine Bildbearbeitung z. B. unter Verwendung eines Wiener-Filters ausgeführt. Da, wie erläutert, durch die axiale Verschiebung während der Aufnahme jedes Rohbilds eine Mitteilung erfolgt, sind nur 9 Rohbilder nötig und im Schritt S3 werden auch nur 9 Rohbilder berücksichtigt. Die Entfaltung ist dadurch einfacher und rechensparsamer.

Als Ergebnis des Schrittes S3 wird im Schritt S4 das hochaufgelöste Bild der Probe 4 ausgegeben. Es basiert auf den Rohbildern. Allerdings wurde nun abweichend vom Stand der Technik eine geringere Anzahl von Rohbildern verwendet, nämlich 9.

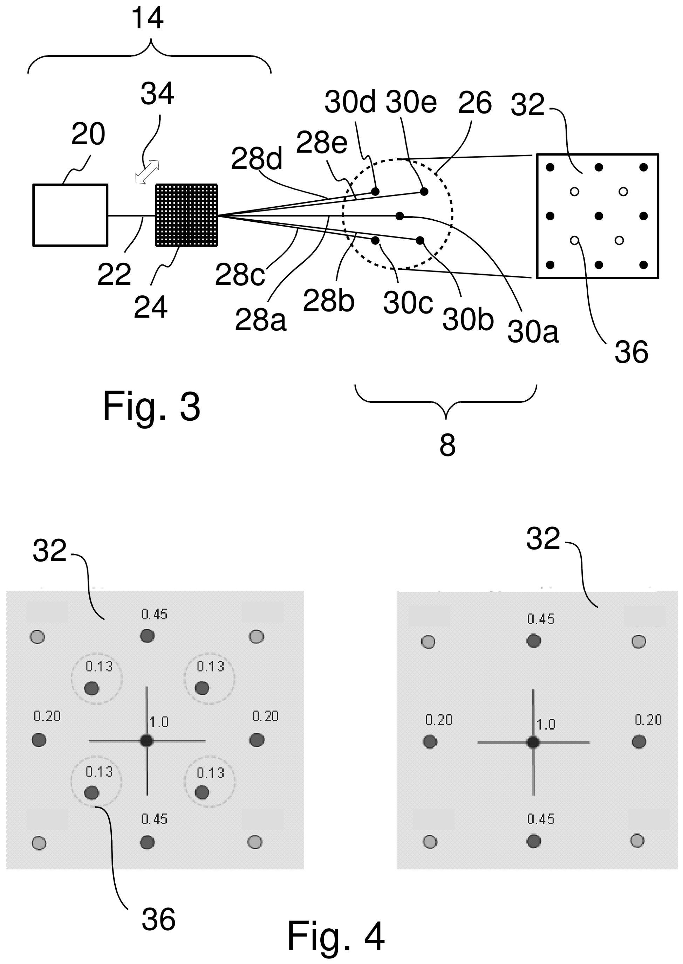

Ein Beispiel für die Realisierung der Beleuchtungseinrichtung 14 ist schematisch in Fig. 3 gezeigt. Die Lichtquelle 20 stellt einen Ursprungsstrahl 22 bereit, beispielsweise aus einem (nicht weiter dargestellten) Laser. Mit Hilfe eines 2D-Kreuzgitters 24 wird dieser Ursprungsstrahl 22 in fünf Teilstrahlen 28a bis 28e zerlegt, die optisch von (nicht weiter dargestellten) geeigneten Linsen oder anderen optischen Elementen so geformt werden, dass in einer Eintrittspupille 26 (in der englischsprachigen Literatur auch als "back focal plane" bezeichnet) des Objektivs 8 fünf Lichtpunkte 30a bis 30e, mit einem zentralen Punkt 30a für den zentralen Teilstrahl und vier im Quadrat darum angeordneten benachbarten Punkten 30b bis 30e für seitliche Teilstrahlen, entstehen. Die fünf Punkte in der Objektivpupille 26 führen dazu, dass das Objektiv 8 in der Probe 4 durch Interferenz ein 3D-SIM-Beleuchtungsmuster 32 bildet. Die Darstellung der Fig. 3 zeigt dabei das SIM-Beleuchtungsmuster 32 in Form dessen Fourierbild in Form von Punkten. Darin sind vier Fourierkomponenten 36 mit nicht gefüllten Punkten markiert, auf die später noch eingegangen wird. In räumlicher Darstellung ist es ein dreidimensionales Muster aus leuchtenden Spots, die in Form eines quadratischen Gitters angeordnet sind. Das Fourierbild des SIM-Beleuchtungsmusters 32 der Fig. 3 zeigt jedoch, dass durch die Interferenz der Strahlung aus den leuchtenden Punkten 30a bis 30e Beugungsordnungen entstehen; jede dieser 13 Beugungsordnungen (diskrete Raumfrequenzkomponenten des Beleuchtungsmusters) ist durch einen Punkt symbolisiert.

Das Muster an Lichtpunkten in der Beleuchtungspupille 9 führt in Fourierdarstellung zu dem gezeigten Muster der Beleuchtungsintensitäten in der Probenebene im Fourier-Raum. Jeder Punkt in der Fourierdarstellung des Beleuchtungsmusters 32 entspricht einer Beugungsordnung. Je zentrumsferner ein Punkt liegt, desto höher ist die Beugungsordnung. Die individuellen Beleuchtungsmuster für die Rohbilder werden erzeugt, indem die Phasenbeziehungen zwischen den leuchtenden Punkten 30a bis 30e variiert werden. Dies erfolgt z.B. indem das Gitter 24, welches in einer Zwischenbildebene des Beleuchtungsstrahlenganges steht, verschoben wird, wobei die Verschiebung im Ergebnis schrägt zu den rechtwinkligen Achsen des quadratischen Gitters liegt. Diese Verschiebung ist in Fig. 3 durch einen Pfeil 34 symbolisiert, der eine Verschiebung z.B. unter 33,7° zu den Hauptachsen des quadratischen Kreuzgitters anzeigt. Die Verschiebung erfolgt in 9 Stufen innerhalb des Phasenintervalls von 0 bis 2π, so dass 9 individuelle Positionen und damit 9 verschiedene Modulationen der Phasenbeziehungen zwischen den leuchtenden Punkten 30a bis 30e in der Objektivpupille 26 erhalten werden. Dies sind die lateralen Positionen des Beleuchtungsmusters 32, eine für jedes Rohbild.

Die hier beschriebene Ausführungsform verwendet nur rein exemplarisch ein quadratisches Gitter. Eine hexagonale Gitterstruktur kommt gleichermaßen in Frage.

Die individuellen Rohbilder werden erzeugt, indem die Probe 4 jeweils mit dem individuellen lateral positionierten Beleuchtungsmuster 32 beleuchtet und das von der Probe 4 reflektierte oder im Fall einer Fluoreszenzanregung fluoreszenzemittierte Licht registriert wird.

Die in Fig. 3 gezeigte Erzeugung des Beleuchtungsmusters 32 durch Interferenz von in der Pupille liegenden, auf die Punkte 30a bis 30e fokussierten Teilstrahlen ist exemplarisch, hat sich jedoch aus historischen Gründen als übliche Betrachtungsweise herausgebildet, in der man die unterschiedlichen, diskreten Frequenzen, die im Beleuchtungsmuster 32 vorhanden sind, als Beugungsordnungen bezeichnet. Signaltechnisch stellen sie Trägerfrequenzen dar. Die Beugungsordnungen entsprechen oberhalb der Grundfrequenz/nullten Beugungsordnung räumlichen Beleuchtungsmusterfrequenzen, allerdings als konjugiert-komplexe Größen, so dass oberhalb der Grundfrequenz immer Paare von zwei betragsgleichen Beugungsordnungen vorliegen. Die Grundfrequenz entspricht einer nullten Beugungsordnung. Es gibt zusätzlich 12 weitere Beugungsordnungen. Die Punkte 30a bis 30e könnten auch anderweitig erzeugt werden, z.B. durch in der Pupille endenden Lichtleitfasern oder geeignet angeordneten Kippspiegelmatrizen.

Die 13 Beugungsordnungen (diskrete Raumfrequenzkomponenten des Beleuchtungsmusters) würden bei Lattice SIM 13 Rohbilder erfordern, um die Bildauswertung mit maximaler Auflösung auszuführen (weniger Rohbilder wären unter gewissen, möglicherweise hinnehmbaren Einschränkungen möglich; siehe US 11 867 894 B1). Statt 13 Rohbildern werden nun in den Ausführungsformen aber 9 Rohbilder erzeugt, also 9 Verschiebestellungen des Gitters 24 verwendet. Die Ausführungsformen arbeiten deshalb mit gegenüber dem Stand der Technik reduzierter Anzahl an Rohbildern. Dennoch wird dieselbe Hochauflösung mit herkömmlicher SIM-Bildrekonstruktion erreicht, denn durch die axiale Bewegung des Beleuchtungsmusters relativ zur Probe 4 fallen alle Beugungsordnungen, die auf Interferenz mit der nullten Beugungsordnung beruhen, weg. Es sind dies diejenigen Interferenztherme, die sich durch Überlagerung mit der Beugungsordnung 28a ergeben. Sie entsprechen den in Fig. 3 nicht gefüllt gezeichneten Punkten 36 in der Fourierdarstellung des Beleuchtungsmusters 32. Somit enthält das Beleuchtungsmuster weniger Raumfrequenzen, was es erlaubt, mit 9 Rohbildern zu arbeiten. Dies beschleunigt das Verfahren der Bildaufnahme natürlich um den Faktor 9/13, also etwa 30%.

Fig. 4 zeigt die Wirkung der Beugungsordnungen (diskrete Raumfrequenzkomponenten des Beleuchtungsmusters) bei der Entstehung des Bildes nach der Lattice SIM-Technik. Die Bewegung des Gitters 24 entlang der beiden Hauptachsen moduliert die Phasen der außen liegenden Punkte 30b bis 30e in Fig. 3. Durch die Interferenz der Beugungsordnungen 30b bis 30e in der Probenebene entstehen die 13 Ordnungen des SIM-Beleuchtungsmusters 32. Sie sind in Fig. 4 links als Fourierbild dargestellt, und die entsprechenden Amplituden der Fourierkomponenten, die sich durch die Interferenz ergeben, sind ebenfalls eingetragen. Durch die axiale Verschiebung während der Aufnahme jedes Rohbildes werden die Raumfrequenzen an den Punkten 36 (durch gestrichelte Kreise symbolisiert) unterdrückt, so dass sich die Situation in der rechten Darstellung effektiv ergibt. Dies erlaubt die Wahl der Rohbilderanzahl auf n = 9.

Die höchsten Modulationsfrequenzen in der Beleuchtungsintensität bestimmen, welche Maximalfrequenzen der Probenstruktur durch das optische System sichtbar gemacht werden können. Durch die Mittelung während der Bildaufnahme gemäß Option 1 werden die Modulationsfrequenzen 36 in der Beleuchtungsintensität, welche eine Tiefenmodulation bewirken würden, eliminiert. Deshalb kann mit weniger Bildern, nämlich 9 Bildern gearbeitet werden. Hierdurch steigt nicht nur die Geschwindigkeit, mit der die Abbildung erfolgen kann, auch die Bildrekonstruktion wird einfacher und damit schneller. Die Interferenzterme, welche vermieden werden durch die Mitteilung, sind diejenigen, die durch Interferenz mit der nullten Beugungsordnung entstehen. Es sind die in Fig. 4 rechts mit Kreisen umrissenen Interferenzterme mit Intensität 0,13, entsprechend den nicht gefüllt gezeichneten Punkten in Fig. 3. Durch diese Interferenzterme wird die Beleuchtungsmodulation zusätzlich axial, d.h. in z-Richtung moduliert. Hierdurch kommt es zu einer axialen Auflösungssteigerung und zu einem optischen Schneiden dicker Proben. Durch die Relativ-Verschiebung während der Bildaufnahme werden diese Interferenztherme durch die effektiv stattfindende Mitteilung entfernt. Die axiale Verschiebung muss dazu um eine Periodenlänge des dreidimensionalen Beleuchtungsmusters erfolgen, wobei die Periodenlänge in Tiefenrichtung relevant ist. Natürlich kann auch ein ganzzahliges Vielfaches der Verschiebung erfolgen. Die Relativ-Verschiebung kann sowohl kontinuierlich als auch in Schritten erfolgen. Sie entfernt die axialen Modulationen und dementsprechend die genannten Interferenzterme 36. Aufgrund der über die Relativ-Verschiebung variierten Phasenbeziehungen verschwinden die Terme 36. Auf diese Weise kann mit nur 9 Rohbildern dasselbe Hochauflösungsbild generiert werden, wie mit 13.

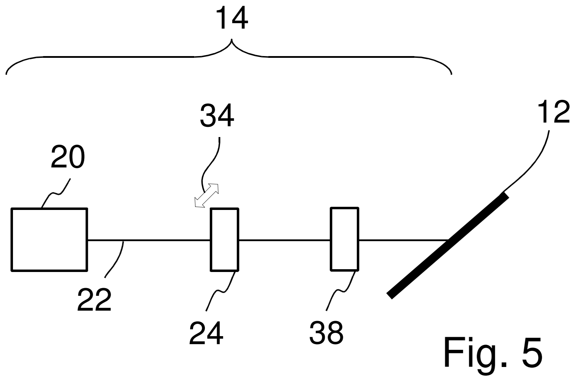

Die axiale Relativ-Verschiebung erfolgt beispielsweise mit einer entsprechenden verstellbaren Optik im Beleuchtungsstrahlengang, beispielsweise einer adaptiven Linse als eine Tubuslinse oder eine Tubuslinsengruppe 38 mit einem adaptiven Linsenanteil im Beleuchtungsstrahlengang. Dies ist schematisch in Fig. 5 dargestellt, welche die Beleuchtungseinrichtung 14 der Fig. 2 vergrößert darstellt. Zwischen dem Kreuzgitter 24 und dem Strahlteiler 12 ist eine adaptive Tubuslinsengruppe 38 angeordnet, die es erlaubt, das Beleuchtungsmuster 23 axial, d.h. in der Tiefe der Probe 4 zu erstellen. Die Steuereinrichtung 16 verstellt die axiale Lage des Beleuchtungsmusters 24, beispielsweise durch Ansteuerung der adaptiven Tubuslinsengruppe 38 und/oder des Probentisches 6 synchronisiert zur Integration der Signale durch den Detektor 10. Alternativen zu dieser Umsetzung mittels verstellbarer Optik wurden oben bereits geschildert.

## Patentansprüche

1. Verfahren zur hochauflösenden SIM-Mikroskopie einer Probe (4), wobei das Verfahren aufweist
- Beleuchten der Probe (4) mit einem periodischen Beleuchtungsmuster (32), das als Gitterstruktur aus hellen Spots ausgebildet ist und dem Beugungsordnungen zugeordnet sind,
- Abbilden der Probe (4) längs einer optischen Achse auf einen Detektor, der Strahlung aufnimmt,
- wobei durch wiederholtes Beleuchten und Abbilden *n* Rohbilder der Probe (4) aufgenommen werden, wobei für jedes der *n* Rohbilder in einer senkrecht zur optischen Achse liegenden Probenebene eine individuelle laterale Position des Beleuchtungsmusters (32) verwendet wird, und
- Erzeugen eines hochaufgelösten Weitfeldbildes aus den *n* Rohbildern,
**dadurch gekennzeichnet, dass**
- für jedes der *n* Rohbilder (32)
-- während der Aufnahme der Strahlung das Beleuchtungsmuster (32) relativ zur Probe (4) längs der optischen Achse um eine axiale Periodenlänge des Beleuchtungsmusters oder um ein Vielfaches der axialen Periodenlänge verschoben wird.

2. Verfahren nach Anspruch 1, **dadurch gekennzeichnet, dass** für jedes der Rohbilder (32) das Beleuchtungsmuster (32) längs der optischen Achse relativ zur Probe (4) während der Aufnahme kontinuierlich verschoben wird.

3. Verfahren nach Anspruch 1, **dadurch gekennzeichnet, dass** für jedes der Rohbilder (32) das Beleuchtungsmuster (32) längs der optischen Achse relativ zur Probe (4) während der Aufnahme schrittweise verschoben wird.

4. Verfahren nach einem der obigen Ansprüche, **dadurch gekennzeichnet, dass** der Detektor für jedes der Rohbilder Strahlung über eine Integrationsdauer aufnimmt und das Beleuchtungsmuster (32) während der Integrationsdauer relativ zur Probe (4) verschoben wird.

5. Verfahren nach einem der obigen Ansprüche, **dadurch gekennzeichnet, dass** *n =* 9 gewählt wird.

6. Mikroskop zur hochauflösenden SIM-Mikroskopie einer Probe (4), das aufweist
- eine Beleuchtungseinrichtung zum Beleuchten der Probe (4) mit einem periodischen Beleuchtungsmuster (32), das als Gitterstruktur aus hellen Spots ausgebildet ist und dem Beugungsordnungen zugeordnet sind,
- eine Abbildungseinrichtung zum Abbilden der Probe (4) längs einer optischen Achse auf einen Detektor, der Strahlung aufnimmt, und
- eine Steuereinrichtung, die die Beleuchtungseinrichtung und den Detektor ansteuert, um durch wiederholtes Beleuchten und Abbilden *n* Rohbilder der Probe (4) aufzunehmen, wobei die Steuereinrichtung für jedes der *n* Rohbilder in einer senkrecht zur optischen Achse liegenden Probenebene eine individuelle laterale Position des Beleuchtungsmusters (32) einstellt, und
- eine optional als Teil der Steuereinrichtung ausgebildete Auswerteeinrichtung zum Erzeugen eines hochaufgelösten Weitfeldbildes aus den n Rohbildern,
**dadurch gekennzeichnet, dass**
- für jedes der n Rohbilder (32) die Steuereinrichtung während der Aufnahme der Strahlung das Beleuchtungsmuster (32) längs der optischen Achse relativ zur Probe (4) um eine axiale Periodenlänge des Beleuchtungsmusters oder um ein ganzzahliges Vielfaches der axialen Periodenlänge verschiebt..

7. Mikroskop nach Anspruch 6, **dadurch gekennzeichnet, dass** die Steuereinrichtung für jedes der Rohbilder (32) während der Aufnahme der Strahlung das Beleuchtungsmuster (32) längs der optischen Achse relativ zur Probe (4) kontinuierlich verschiebt.

8. Mikroskop nach Anspruch 6, **dadurch gekennzeichnet, dass** die Steuereinrichtung für jedes der *n* Rohbilder (32) während der Aufnahme der Strahlung das Beleuchtungsmuster (32) längs der optischen Achse relativ zur Probe (4) schrittweise verschiebt.

9. Mikroskop nach einem der Ansprüche 6 bis 8, **dadurch gekennzeichnet, dass** der Detektor für jedes der Rohbilder Strahlung über eine Integrationsdauer aufnimmt und dass die Steuereinrichtung das Beleuchtungsmuster (32) relativ zur Probe (4) während der Integrationsdauer verschiebt.

10. Mikroskop nach einem der Ansprüche 6 bis 9, **dadurch gekennzeichnet, dass** die Steuereinrichtung *n* = *9* verwendet.

11. Mikroskop nach einem der Ansprüche 6 bis 10, **dadurch gekennzeichnet, dass** der Beleuchtungsstrahlengang eine verstellbare Tubuslinsenoptik (38) aufweist und die Steuereinrichtung die Tubuslinsenoptik (38) zum Verschieben des Beleuchtungsmusters (32) ansteuert.

12. Mikroskop nach einem der Ansprüche 6 bis 11, **dadurch gekennzeichnet, dass** der Beleuchtungsstrahlengang in einer Zwischenbildebene ein axial bewegtes Gitter (24) aufweist und die Steuereinrichtung das Gitter (24) zum Verschieben des Beleuchtungsmusters (32) axial bewegt.
